# EUROPÄISCHE PATENTSCHRIFT

(11) **EP 3 526 492 B1**
(45) Veröffentlichungstag und Bekanntmachung des Hinweises auf die Patenterteilung: **15.07.2020**
(21) Anmeldenummer: 17772337.6
(22) Anmeldetag: 13.09.2017
(51) Int. Cl.: F16H 59/02

(54) **SCHALTUNGSGEHÄUSE ZUM AUFNEHMEN EINES ABSCHNITTS EINES WÄHLHEBELS FÜR EIN FAHRZEUG UND SCHALTUNGSBAUGRUPPE**
CIRCUIT HOUSING FOR RECEIVING A PORTION OF A SELECTOR LEVER FOR A VEHICLE, AND CIRCUIT ASSEMBLY
CARTER DE BOÎTE DE VITESSES DESTINÉ À RECEVOIR UN SEGMENT D'UN LEVIER DE VITESSES POUR UN VÉHICULE ET MODULE DE BOÎTE DE VITESSES

(30) Priorität: 13.10.2016 DE 102016219925
(43) Veröffentlichungstag der Anmeldung: 21.08.2019
(73) Patentinhaber: ZF Friedrichshafen AG, 88046 Friedrichshafen (DE)
(72) Erfinder: HESSEL, Alex, 49448 Lemförde (DE)
(74) Vertreter: ZF Friedrichshafen AG
(86) Internationale Anmeldenummer: PCT/EP2017/073013
(87) Internationale Veröffentlichungsnummer: WO 2018/068974

(56) Entgegenhaltungen:
- EP-A1- 0 279 087
- EP-A1- 3 306 143
- EP-A2- 3 118 490
- WO-A1-2015/152566
- DE-A1-102007 005 496
- DE-U1-202009 016 424
- JP-A- H0 930 282
- JP-A- H09 156 396
- JP-A- 2009 101 914
- JP-A- 2010 000 898

## Beschreibung

Die vorliegende Erfindung bezieht sich auf ein Schaltungsgehäuse zum Aufnehmen eines Abschnitts eines Wählhebels für ein Fahrzeug und auf eine Schaltungsbaugruppe.

Die Gehäuseteile eines Schaltungsgehäuses für ein Fahrzeug sind in der Regel miteinander verschraubbar.

Aus dem Dokument DE-A1-10 2007 005 496 ist ein Schaltungsgehäuse mit einem Bodenteil und einem Deckelteil bekannt, welche miteinander verrastet sind.

Weitere Schaltungsgehäuse mit Verrastungselementen gehen aus den Dokumenten EP-A1-0279087 oder WO-A1-2015/152566 oder JP-A-09159396 hervor.

Es ist Aufgabe der Erfindung ein verbessertes Schalgungsgehäuse wie auch eine verbesserte Schaltungsbaugruppe zu schaffen, speziell um damit den Montageaufwand zu reduzieren.

Die Aufgabe wird durch ein Schaltungsgehäuse gemäß Anspruch 1 und einer Schaltungsbaugruppe gemäß Anspruch 7 gelöst.

Vorteilhafte Weiterbildungen der Erfindung ergeben sich aus den abhängigen Ansprüchen.

Bei dem Schaltungsgehäuse kann es sich um ein Gehäuse zum Aufnehmen einer elektronisch oder mechanisch mit einem Fahrzeuggetriebe gekoppelten Schaltkulisse zum Schalten des Fahrzeuggetriebes handeln. Wenn es sich bei dem Wählhebel um einen Programmwählhebel handelt, kann die Schaltkulisse alternativ zum Auswählen eines Programms zum Steuern des Fahrzeugs, beispielsweise zum Steuern eines Antriebs des Fahrzeugs, vorgesehen sein. Hierbei kann ein Endabschnitt des Wählhebels beweglich in der Schaltkulisse oder auch im Deckelteil gelagert sein. Die Schaltkulisse kann eine geeignete Mechanik oder Sensorik zum Erfassen einer Stellung oder Bewegung des Wählhebels aufweisen. Das Schaltungsgehäuse kann beispielsweise mit einer Fahrzeugkonsole verschraubbar sein. Insbesondere kann es sich bei dem Schaltungsgehäuse um ein mehrteiliges Kunststoffformteil handeln. Unter einem Bodenteil kann ein schalenförmiges Teil des Schaltungsgehäuses verstanden werden. Das Bodenteil kann beispielsweise ausgeformt sein, um die Schaltkulisse aufzunehmen. Unter einem Deckelteil kann beispielsweise ein platten- oder ebenfalls schalenförmiges Teil zum Abdecken des Bodenteils verstanden werden. Unter einem Bodenverrastungselement und einem Deckelverrastungselement können Elemente verstanden werden, die ohne Zuhilfenahme von Werkzeug miteinander verrastbar sind. Im montierten Zustand des Schaltungsgehäuses können das Bodenverrastungselement und das Deckelverrastungselement kraft- oder formschlüssig oder sowohl kraft- als auch formschlüssig miteinander verrastet sein. Beispielsweise kann eines der beiden Verrastungselemente als Öse und ein anderes der beiden Verrastungselemente als Rastnase ausgeformt sein.

Der hier beschriebene Ansatz beruht auf der Erkenntnis, dass die Gehäuseteile eines mehrteiligen Schaltungsgehäuses für ein Fahrzeuggetriebe mithilfe entsprechender Verrastungselemente schraubenlos miteinander verrastet werden können. Dies hat den Vorteil, dass das Schaltungsgehäuse ohne Schrauben und entsprechendes Werkzeug zusammengefügt werden kann, womit die Montagezeit verkürzt werden kann und die Herstellungskosten reduziert werden können.

Gemäß einer Ausführungsform kann das Deckelverrastungselement als Öse ausgeformt sein. Das Bodenverrastungselement kann als eine mit der Öse verhakbare Rastnase ausgeformt sein. Unter einer Öse kann beispielsweise eine U-förmige Klammer mit zwei Schenkeln und einer die beiden Schenkel miteinander verbindenden Querstrebe verstanden werden. Dabei kann die Querstrebe als Anschlag für das Bodenverrastungselement fungieren. Beispielsweise kann das Deckelverrastungselement in Form der Öse von dem Deckelteil abragen. Insbesondere kann das Deckelverrastungselement dabei senkrecht zu einer Haupterstreckungsebene des Deckelteils von dem Deckelteil abragen. Durch diese Ausführungsform kann eine robuste Verrastung zwischen Deckel- und Bodenteil gewährleistet werden.

Gemäß einer weiteren Ausführungsform kann umgekehrt das Bodenverrastungselement als Öse ausgeformt sein. Dabei kann das Deckelverrastungselement als eine mit der Öse verhakbare Rastnase ausgeformt sein. Auch durch diese Ausführungsform kann eine robuste Verrastung zwischen Deckel- und Bodenteil gewährleistet werden.

Es ist ferner vorteilhaft, wenn das Deckelverrastungselement quer, beispielsweise senkrecht zu einer Haupterstreckungsebene des Deckelteils von dem Deckelteil abragt. Zusätzlich oder alternativ kann das Bodenverrastungselement quer, beispielsweise senkrecht zu einer Haupterstreckungsebene des Bodenteils von dem Bodenteil abragen. Unter einer Hauptstreckungsebene kann eine Ebene der größten Ausdehnung des Deckelteils bzw. des Bodenteils verstanden werden. Dadurch kann das Zusammenfügen von Deckel- und Bodenteil vereinfacht werden.

Das Bodenteil kann gemäß einer weiteren Ausführungsform zumindest ein weiteres Bodenverrastungselement aufweisen. Dabei kann das Deckelteil zumindest ein mit dem weiteren Bodenverrastungselement verrastbares weiteres Deckelverrastungselement aufweisen. Dadurch kann das Deckelteil sicher an dem Bodenteil befestigt werden.

Das Bodenteil kann beispielsweise rechteckig ausgeformt sein. Zusätzlich oder alternativ kann auch das Deckelteil rechteckig ausgeformt sein. Dabei können das Bodenverrastungselement und das weitere Bodenverrastungselement an einander gegenüberliegenden Seiten des Bodenteils angeordnet sein. Entsprechend können das Deckelverrastungselement und das weitere Deckelverrastungselement an einander gegenüberliegenden Seiten des Deckelteils angeordnet sein. Dadurch kann das Deckelteil mithilfe lediglich zweier Paare von Verrastungselementen und somit besonders einfach mit dem Bodenteil verrastet werden.

Erfindungsgemäß weist das Bodenteil zumindest einen Bodenvorsprung mit einer Durchstecköffnung zum Durchstecken einer Schraube auf. Das Deckelteil weist ferner zumindest einen Deckelvorsprung mit einer Durchstecköffnung zum Durchstecken der Schraube auf. Dabei liegen die Durchstecköffnung des Bodenvorsprungs und die Durchstecköffnung des Deckelvorsprungs einander gegenüber, wenn das Deckelteil an dem Bodenteil befestigt ist. Je nach Ausführungsform kann das Bodenteil auch eine Mehrzahl von Bodenvorsprüngen, beispielsweise zumindest vier Bodenvorsprünge, aufweisen. Entsprechend kann das Deckelteil so viele Deckelvorsprünge aufweisen, wie das Bodenteil Bodenvorsprünge aufweist. Beispielsweise können die Boden- oder Deckelvorsprünge je benachbart zu je einer Ecke des Boden- bzw. Deckelteils angeordnet sein. Durch diese Ausführungsform wird eine Verschraubung des Schaltungsgehäuses im Fahrzeug mit einer geringstmöglichen Anzahl an Schrauben ermöglicht. Dadurch wird der Montageaufwand reduziert.

Erfindungsgemäß ist der Bodenvorsprung als Anschlag zur Montage des Schaltungsgehäuses in einer Fahrzeugkonsole ausgebildet . Dadurch wird die Montage des Schaltungsgehäuses weiter vereinfacht.

Gemäß einer weiteren Ausführungsform kann das Deckelteil eine Wählhebelöffnung zum Hindurchführen des Wählhebels aufweisen. Dadurch kann der Wählhebel sehr einfach in das Schaltungsgehäuse eingeführt werden, etwa auch nach der Montage des Schaltungsgehäuses im Fahrzeug.

Ferner ist es vorteilhaft, wenn das Bodenteil oder, zusätzlich oder alternativ, das Deckelteil als Kunststoffformteil ausgebildet ist. Dadurch kann das Schaltungsgehäuse in unterschiedlichsten Formen bei verhältnismäßig geringen Fertigungskosten hergestellt werden.

Der hier vorgestellte Ansatz schafft schließlich eine Schaltungsbaugruppe mit folgenden Merkmalen:
einem Wählhebel;
einer Schaltkulisse; und
einem Schaltungsgehäuse gemäß einer vorstehenden Ausführungsform, wobei die Schaltkulisse in dem Bodenteil angeordnet ist, ein Abschnitt des Wählhebels durch die Wählhebelöffnung des Deckelteils hindurchgeführt ist und ein Endabschnitt des Wählhebels beweglich in der Schaltkulisse angeordnet ist.

Eine derartige Schaltungsbaugruppe bietet den Vorteil einer besonders einfachen und schnellen Montage. Die Schaltungsbaugruppe kann zum Steuern unterschiedlicher Funktionen im Fahrzeug eingesetzt werden. Beispielsweise kann die Schaltungsbaugruppe zum Schalten eines Fahrzeuggetriebes oder zum Steuern eines Antriebs oder eines Informationssystems des Fahrzeugs verwendet werden.

Die Erfindung wird anhand der beigefügten Zeichnungen beispielhaft näher erläutert. Es zeigen:
- Figur 1: eine schematische Darstellung eines Schaltungsgehäuses gemäß einem Ausführungsbeispiel;
- Figur 2: eine schematische Darstellung eines Schaltungsgehäuses aus Figur 1 im montierten Zustand;
- Figur 3: eine schematische Darstellung eines Schaltungsgehäuses aus Figur 2 und einer Fahrzeugkonsole;
- Figur 4: eine schematische Darstellung eines Schaltungsgehäuses aus Figur 2 und einer Fahrzeugkonsole;
- Figur 5: eine schematische Darstellung eines Schaltungsgehäuses aus Figur 2 und einer Fahrzeugkonsole; und
- Figur 6: eine schematische Darstellung einer Schaltungsbaugruppe gemäß einem Ausführungsbeispiel.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

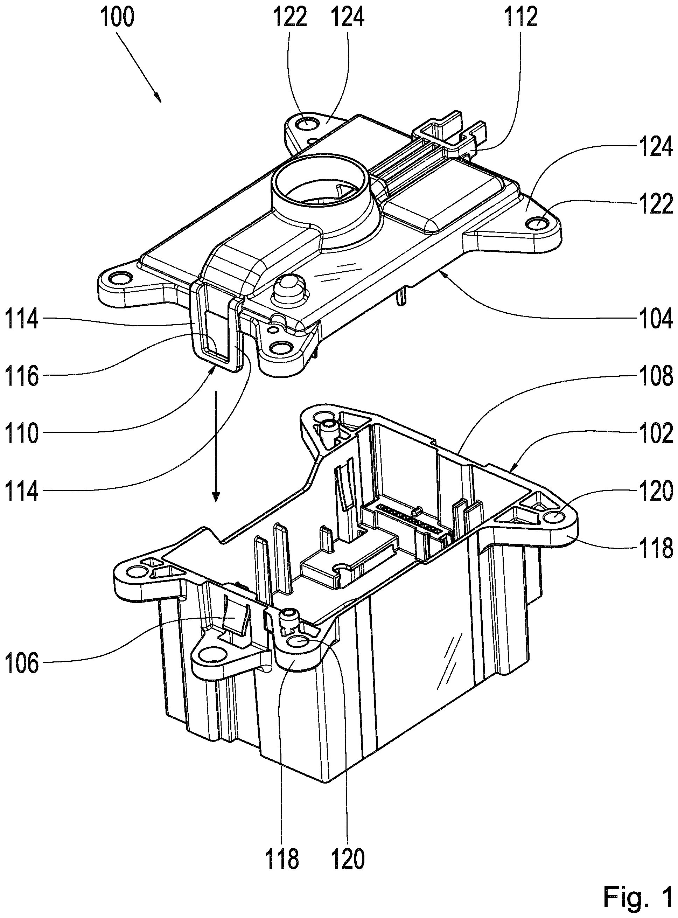

Figur 1 zeigt eine schematische Darstellung eines Schaltungsgehäuses 100 gemäß einem Ausführungsbeispiel, hier im demontierten Zustand. Das Schaltungsgehäuse 100 umfasst ein schalenförmiges Bodenteil 102 und ein plattenförmiges Deckelteil 104 zum Verschließen des Bodenteils 102. Das Bodenteil 102 ist gemäß diesem Ausführungsbeispiel mit einem Bodenverrastungselement 106 und einem weiteren Bodenverrastungselement 108 ausgebildet. Das Bodenteil 102 ist beispielhaft rechteckig ausgeformt, wobei die beiden Bodenverrastungselemente 106, 108 je mittig an einer Schmalseite des Bodenteils 102 angeordnet sind und somit einander gegenüberliegen. Analog dazu weist das Deckelteil 104 ein mit dem Bodenverrastungselement 106 verrastbares Deckelverrastungselement 110 sowie ein mit dem weiteren Bodenverrastungselement 108 verrastbares weiteres Deckelverrastungselement 112 auf. Ähnlich wie das Bodenteil 102 ist auch das Deckelteil 104 rechteckförmig ausgestaltet, wobei die beiden Deckelverrastungselemente 110, 112 ebenfalls mittig an je einer Schmalseite des Deckelteils 104 angeordnet sind. Mittels der vier Verrastungselemente 106, 108, 110, 112 kann das Deckelteil 102 schraubenlos an dem Bodenteil 104 befestigt werden.

Je nach Ausführungsbeispiel kann das Bodenteil 102 mehr als zwei Bodenverrastungselemente und das Deckelteil 104 mehr als zwei Deckelverrastungselemente aufweisen.

Gemäß dem in Figur 1 gezeigten Ausführungsbeispiel sind die beiden Deckelverrastungselemente 110, 112 je als eine U-förmige Klammer oder Öse mit zwei Schenkeln 114 und einer die beiden Schenkel 114 miteinander verbindenden Querstrebe 116 ausgebildet. Dabei ragen die beiden Deckelverrastungselemente 110, 112 je im Wesentlichen senkrecht zu einer Haupterstreckungsebene des Deckelteils 104 in einer Montagerichtung von dem Deckelteil 104 ab. Die Montagerichtung ist mit einem vertikalen Pfeil gekennzeichnet. Die beiden Bodenverrastungselemente 106, 108 sind je als eine Rastnase ausgeformt, die im montierten Zustand des Schaltungsgehäuses 100 mit der Querstrebe 116 verhakt ist. Die Rastnase ist beispielsweise als eine elastisch mit einer Seitenwand des Bodenteils 102 verbundene und im unbelasteten Zustand leicht schräg von der Seitenwand abstehende Lasche ausgebildet.

Gemäß einem alternativen Ausführungsbeispiel sind umgekehrt die Bodenverrastungselemente 106, 108 als Klammer oder Öse ausgeformt, während die Deckelverrastungselemente 110, 112 als Rastnase ausgeformt sind.

Beispielhaft ist das Bodenteil 102 gemäß Figur 1 mit vier Bodenvorsprüngen 118 realisiert. Die vier Bodenvorsprüngen 118 weisen je eine Durchstecköffnung 120 zum Durchstecken einer Schraube auf. Gemäß Figur 1 sind die vier Bodenvorsprünge 118 je an einer dem Deckelteil 104 zugewandten Ecke des Bodenteils 102 angeordnet. Analog dazu weist auch das Deckelteil 104 vier Deckelvorsprünge 122 mit je einer Durchstecköffnung 124 zum Durchstecken einer Schraube auf. Die Deckelvorsprünge 122 sind derart an dem Deckelteil 104 angeordnet, dass im montierten Zustand des Schaltungsgehäuses 100 je einer der Deckelvorsprünge 122 flächig auf je einem der Bodenvorsprünge 120 aufliegt, wobei die jeweiligen Durchstecköffnungen 120, 124 deckungsgleich übereinanderliegen, also miteinander fluchten.

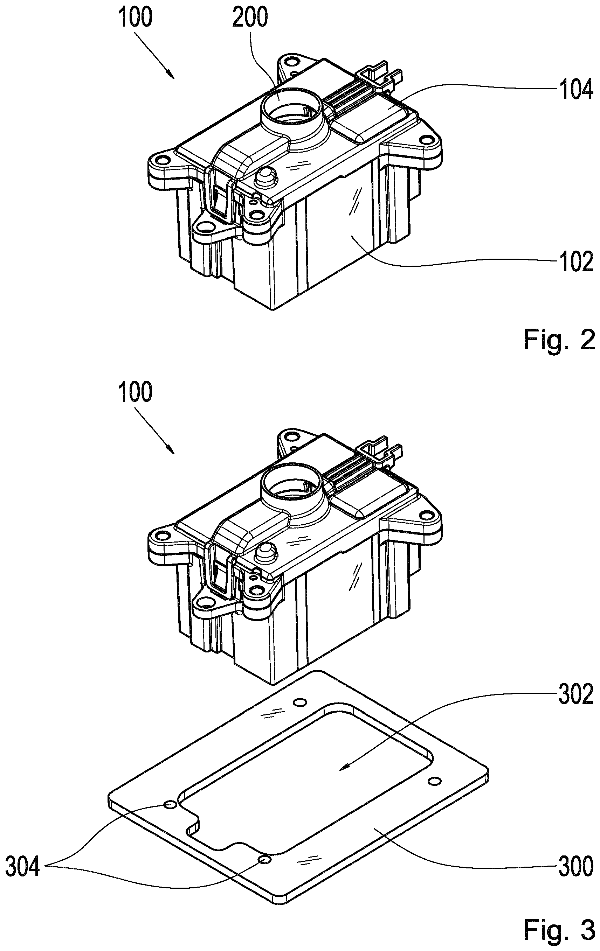

Figur 2 zeigt eine schematische Darstellung eines Schaltungsgehäuses 100 aus Figur 1 im montierten Zustand. Wie aus Figur 2 ersichtlich, ist das Deckelteil 104 gemäß diesem Ausführungsbeispiel mit einer Wählhebelöffnung 200 zum Hindurchführen eines Abschnitts eines Wählhebels, beispielsweise eines Gangwählhebels oder eines Programmwählhebels, realisiert. Der Wählhebel kann vorgesehen zu sein, um von einem Fahrer eines Fahrzeugs betätigt zu werden. Beispielhaft ist die Wählhebelöffnung 200 im Wesentlichen mittig an dem Deckelteil 104 platziert.

Figur 3 zeigt eine schematische Darstellung eines Schaltungsgehäuses 100 aus Figur 2 und einer Fahrzeugkonsole 300. Die Fahrzeugkonsole 300 ist beispielsweise Teil eines Fahrzeugs, in dem das Schaltungsgehäuse 100 montiert werden soll. Die Fahrzeugkonsole 300, hier als einfache Platte realisiert, umfasst eine Aussparung 302 für das Schaltungsgehäuse 100 und beispielhaft vier Schraubenlöcher 304 zum Durchstecken oder Einschrauben je einer Schraube.

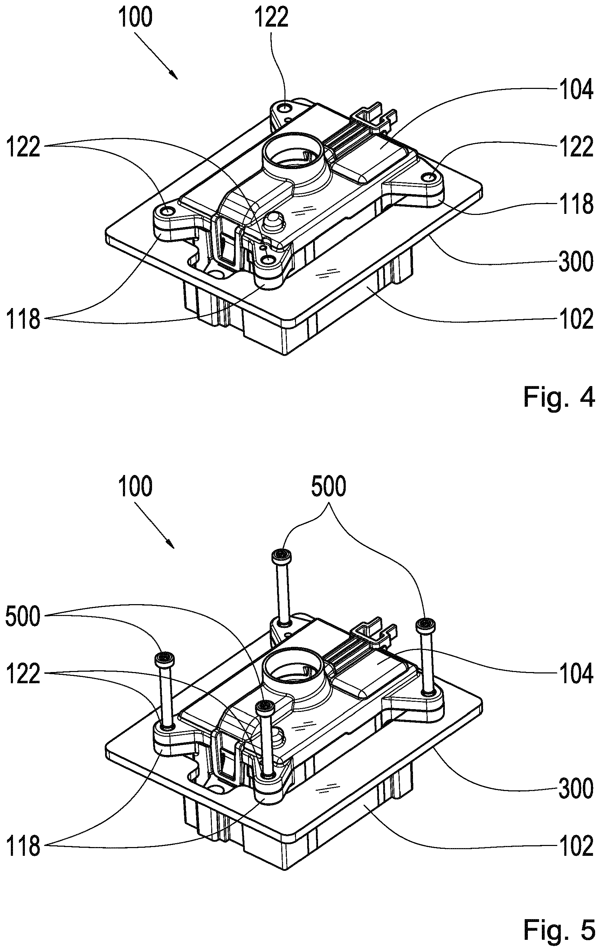

Figur 4 zeigt eine schematische Darstellung eines Schaltungsgehäuses 100 aus Figur 2 und einer Fahrzeugkonsole 300. Im Unterschied zu Figur 3 zeigt Figur 4 das Schaltungsgehäuse 100 und die Fahrzeugkonsole 300 im montierten Zustand. Das Schaltungsgehäuse 100 ist teilweise durch die Aussparung hindurchgeführt, wobei die Bodenvorsprünge 118 des Bodenteils 102 als Anschläge fungieren und die jeweiligen Durchstecköffnungen der Bodenvorsprünge 118 und der Deckelvorsprünge 122 deckungsgleich mit den Schraubenlöchern in der Fahrzeugkonsole 300 sind.

Figur 5 zeigt eine schematische Darstellung eines Schaltungsgehäuses 100 aus Figur 2 und einer Fahrzeugkonsole 300. Wie in Figur 4 sind das Schaltungsgehäuse 100 und die Fahrzeugkonsole 300 in Figur 5 im montierten Zustand gezeigt. Zusätzlich sind vier Schrauben 500 zum Verschrauben des Schaltungsgehäuses 100 mit der Fahrzeugkonsole 300 mittels der Vorsprünge 118, 122 eingezeichnet. Beispielsweise werden die Gehäuseteile 102, 104 erst bei Montage des Schaltungsgehäuses 100 im Fahrzeug mithilfe der Schrauben 500 endgültig zusammengefügt.

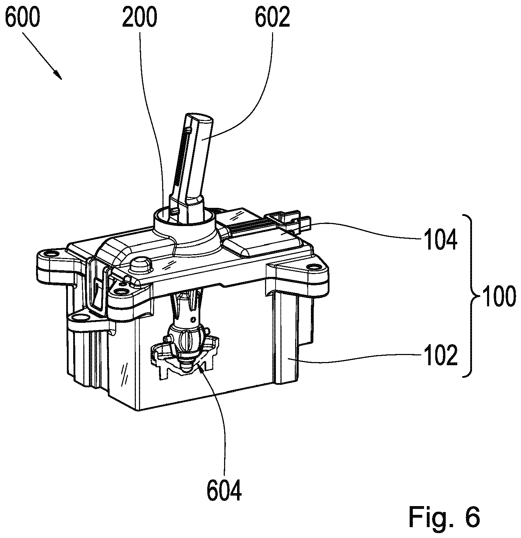

Figur 6 zeigt eine schematische Darstellung einer Schaltungsbaugruppe 600 gemäß einem Ausführungsbeispiel. Die Schaltungsbaugruppe 600 umfasst das Schaltungsgehäuse 100, etwa ein Schaltungsgehäuse, wie es vorangehend anhand der Figuren 1 bis 5 beschrieben ist, einen Wählhebel 602, der durch die Wählhebelöffnung 200 des Deckelteils 104 in das Schaltungsgehäuse 100 eingeführt ist, sowie eine im Bodenteil 102 angeordnete Schaltkulisse 604. Bei der Schaltkulisse 604 kann es sich um eine durch den Wählhebels 602 mechanisch betätigbare Schaltkulisse 604 handeln oder um eine Schaltkulisse 604 handeln, die ausgebildet ist, um eine Stellung oder Bewegung des Wählhebels 602 elektronisch unter Verwendung einer geeigneten Sensorik zu erfassen und ein die Stellung oder Bewegung repräsentierendes Stellsignal bereitzugeben. Dazu ist ein Endabschnitt des Wählhebels 602 beweglich in der Schaltkulisse 604 angeordnet. Der Wählhebel 602 dient gemäß einem Ausführungsbeispiel zum Wählen einer Getriebestellung des Fahrzeuggetriebes, bei dem es sich insbesondere um ein Automatikgetriebe handeln kann, oder beispielsweise zum Wählen eines Fahrprogramms des Fahrzeugs. Gemäß einem Ausführungsbeispiel ist der Wählhebel 602 an der Wählhebelöffnung 200 dreh- oder schwenkbar gelagert.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Schaltungsgehäuse
- 102: Bodenteil
- 104: Deckelteil
- 106: Bodenverrastungselement
- 108: weiteres Bodenverrastungselement
- 110: Deckelverrastungselement
- 112: weiteres Deckelverrastungselement
- 114: Schenkel
- 116: Querstrebe
- 118: Bodenvorsprung
- 120: Durchstecköffnung eines Bodenvorsprungs
- 122: Durchstecköffnung eines Deckelvorsprungs
- 124: Deckelvorsprung
- 200: Wählhebelöffnung
- 300: Fahrzeugkonsole
- 302: Aussparung
- 304: Schraubenloch
- 500: Schraube
- 600: Schaltungsbaugruppe
- 602: Wählhebel
- 604: Schaltkulisse

## Patentansprüche

1. Schaltungsgehäuse (100) zum Aufnehmen eines Abschnitts eines Wählhebels (602) für ein Fahrzeug, wobei das Schaltungsgehäuse (100) folgende Merkmale aufweist:
ein Bodenteil (102) mit zumindest einem Bodenverrastungselement (106); und
ein Deckelteil (104) zum Verschließen des Bodenteils (102), wobei das Deckelteil (104) zumindest ein mit dem Bodenverrastungselement (106) verrastbares Deckelverrastungselement (110) aufweist, um das Deckelteil (104) schraubenlos an dem Bodenteil (102) befestigen zu können,
**dadurch gekennzeichnet, dass**
das Bodenteil (102) zumindest einen Bodenvorsprung (118) mit einer Durchstecköffnung (120) zum Durchstecken einer Schraube (500) aufweist und das Deckelteil (104) zumindest einen Deckelvorsprung (122) mit einer Durchstecköffnung (124) zum Durchstecken der Schraube (500) aufweist, wobei die Durchstecköffnung (120) des Bodenvorsprungs (118) und die Durchstecköffnung (124) des Deckelvorsprungs (122) einander gegenüberliegen, wenn das Deckelteil (104) an dem Bodenteil (102) befestigt ist, und wobei der Bodenvorsprung (118) als Anschlag zur Montage des Schaltungsgehäuses (100) in einer Fahrzeugkonsole (300) ausgebildet ist.

2. Schaltungsgehäuse (100) gemäß Anspruch 1, bei dem das Deckelverrastungselement (110) als Öse ausgeformt und das Bodenverrastungselement (106) als eine mit der Öse verhakbare Rastnase ausgeformt ist, oder bei dem das Bodenverrastungselement (106) als Öse ausgeformt und das Deckelverrastungselement (110) als eine mit der Öse verhakbare Rastnase ausgeformt ist.

3. Schaltungsgehäuse (100) gemäß einem der vorangegangenen Ansprüche, bei dem das Deckelverrastungselement (110) quer zu einer Haupterstreckungsebene des Deckelteils (104) von dem Deckelteil (104) abragt oder bei dem das Bodenverrastungselement (106) quer zu einer Haupterstreckungsebene des Bodenteils (102) von dem Bodenteil (102) abragt.

4. Schaltungsgehäuse (100) gemäß einem der vorangegangenen Ansprüche, bei dem das Bodenteil (102) zumindest ein weiteres Bodenverrastungselement (108) aufweist und das Deckelteil (104) zumindest ein mit dem weiteren Bodenverrastungselement (108) verrastbares weiteres Deckelverrastungselement (112) aufweist.

5. Schaltungsgehäuse (100) gemäß Anspruch 4, bei dem das Bodenteil (102) und/oder das Deckelteil (104) rechteckig ausgeformt ist, wobei das Bodenverrastungselement (106) und das weitere Bodenverrastungselement (108) an einander gegenüberliegenden Seiten des Bodenteils (102) angeordnet sind und/oder wobei das Deckelverrastungselement (110) und das weiteres Deckelverrastungselement (112) an einander gegenüberliegenden Seiten des Deckelteils (104) angeordnet sind.

6. Schaltungsgehäuse (100) gemäß einem der vorangegangenen Ansprüche, bei dem das Bodenteil (102) und/oder das Deckelteil (104) als Kunststoffformteil ausgebildet ist.

7. Schaltungsgehäuse (100) gemäß einem der vorangegangenen Ansprüche, bei dem das Deckelteil (104) eine Wählhebelöffnung (200) zum Hindurchführen des Wählhebels (602) aufweist.

8. Schaltungsbaugruppe (600) mit folgenden Merkmalen:
einem Wählhebel (602);
einer Schaltkulisse (604); und
einem Schaltungsgehäuse (100) gemäß Anspruch 7, wobei die Schaltkulisse (604) in dem Bodenteil (102) angeordnet ist, ein Abschnitt des Wählhebels (602) durch die Wählhebelöffnung (200) des Deckelteils (104) hindurchgeführt ist und ein Endabschnitt des Wählhebels (602) beweglich in der Schaltkulisse (604) angeordnet ist.

## Claims

1. Selector mechanism housing (100) for receiving a portion of a selector lever (602) for a vehicle, wherein the selector mechanism housing (100) has the following features:
a base part (102) having at least one base latching element (106); and
a cover part (104) for closing the base part (102), wherein the cover part (104) has at least one cover latching element (110) which is able to latch to the base latching element (106) so as to be able to fasten the cover part (104) to the base part (102) without screws,
**characterized in that**
the base part (102) has at least one base projection (118) having a penetration opening (120) for penetration by a screw (500), and the cover part (104) has at least one cover projection (122) having a penetration opening (124) for penetration by the screw (500), wherein the penetration opening (120) of the base projection (118) and the penetration opening (124) of the cover projection (122) are mutually opposite when the cover part (104) is fastened to the base part (102), and wherein the base projection (118) is configured as a detent for assembling the selector mechanism housing (100) in a vehicle console (300).

2. Selector mechanism housing (100) according to Claim 1, wherein the cover latching element (110) is moulded as an eyelet and the base latching element (106) is moulded as a latching cam that hooks into the eyelet, or wherein the base latching element (106) is moulded as an eyelet and the cover latching element (110) is moulded as a latching cam that hooks into the eyelet.

3. Selector mechanism housing (100) according to one of the preceding claims, wherein the cover latching element (110) protrudes from the cover part (104) transversely to a plane of main extent of the cover part (104), or wherein the base latching element (106) protrudes from the base part (102) transversely to a plane of main extent of the base part (102).

4. Selector mechanism housing (100) according to one of the preceding claims, wherein the base part (102) has at least one further base latching element (108), and the cover part (104) has at least one further cover latching element (112) which is able to latch to the further base latching element (108).

5. Selector mechanism housing (100) according to Claim 4, wherein the base part (102) and/or the cover part (104) are/is moulded so as to be rectangular, wherein the base latching element (106) and the further base latching element (108) are disposed on mutually opposite sides of the base part (102), and/or wherein the cover latching element (110) and the further cover latching element (112) are disposed on mutually opposite sides of the cover part (104).

6. Selector mechanism housing (100) according to one of the preceding claims, wherein the base part (102) and/or the cover part (104) are/is configured as moulded plastic parts or a moulded plastic part, respectively.

7. Selector mechanism housing (100) according to one of the preceding claims, wherein the cover part (104) has a selector lever opening (200) for guiding through the selector lever (602).

8. Selector assembly (600) having the following features:
a selector lever (602);
a selector gate (604); and
a selector mechanism housing (100) according to Claim 7, wherein the selector gate (604) is disposed in the base part (102), a portion of the selector lever (602) is guided through the selector lever opening (200) of the cover part (104), and an end portion of the selector lever (602) is disposed so as to be movable in the selector gate (604).

## Revendications

1. Carter de boîte de vitesses (100) pour recevoir une portion d'un levier de sélection (602) pour un véhicule, le carter de boîte de vitesses (100) présentant les caractéristiques suivantes :
une partie de fond (102) avec au moins un élément d'encliquetage de fond (106) ; et
une partie de couvercle (104) pour fermer la partie de fond (102), la partie de couvercle (104) présentant au moins un élément d'encliquetage de couvercle (110) pouvant être encliqueté avec l'élément d'encliquetage de fond (106), afin de pouvoir fixer la partie de couvercle (104) sans vis à la partie de fond (102),
**caractérisé en ce que**
la partie de fond (102) présente au moins une saillie de fond (118) avec une ouverture d'enfichage (120) pour l'enfichage d'une vis (500) et la partie de couvercle (104) présente au moins une saillie de couvercle (122) avec une ouverture d'enfichage (124) pour l'enfichage de la vis (500), l'ouverture d'enfichage (120) de la saillie de fond (118) et l'ouverture d'enfichage (124) de la saillie de couvercle (122) étant opposées l'une à l'autre lorsque la partie de couvercle (104) est fixée à la partie de fond (102), et la saillie de fond (118) étant réalisée sous forme de butée pour le montage du carter de boîte de vitesses (100) dans une console de véhicule (300).

2. Carter de boîte de vitesses (100) selon la revendication 1, dans lequel l'élément d'encliquetage de couvercle (110) est formé en tant qu'œillet et l'élément d'encliquetage de fond (106) est formé en tant qu'ergot d'encliquetage pouvant être accroché à l'œillet, ou dans lequel l'élément d'encliquetage de fond (106) est formé en tant qu'œillet et l'élément d'encliquetage de couvercle (110) est formé en tant qu'ergot d'encliquetage pouvant être accroché à l'œillet.

3. Carter de boîte de vitesses (100) selon l'une quelconque des revendications précédentes, dans lequel l'élément d'encliquetage de couvercle (110) fait saillie depuis la partie de couvercle (104) transversalement à un plan d'étendue principal de la partie de couvercle (104) ou dans lequel l'élément d'encliquetage de fond (106) fait saillie depuis la partie de fond (102) transversalement à un plan d'étendue principal de la partie de fond (102).

4. Carter de boîte de vitesses (100) selon l'une quelconque des revendications précédentes, dans lequel la partie de fond (102) présente au moins un élément d'encliquetage de fond supplémentaire (108) et la partie de couvercle (104) présente au moins un élément d'encliquetage de couvercle supplémentaire (112) pouvant être encliqueté avec l'élément d'encliquetage de fond supplémentaire (108) .

5. Carter de boîte de vitesses (100) selon la revendication 4, dans lequel la partie de fond (102) et/ou la partie de couvercle (104) sont formées sous forme rectangulaire, l'élément d'encliquetage de fond (106) et l'élément d'encliquetage de fond supplémentaire (108) étant disposés au niveau de côtés mutuellement opposés de la partie de fond (102) et/ou dans lequel l'élément d'encliquetage de couvercle (110) et l'élément d'encliquetage de couvercle supplémentaire (112) sont disposés au niveau de côtés mutuellement opposés de la partie de couvercle (104).

6. Carter de boîte de vitesses (100) selon l'une quelconque des revendications précédentes, dans lequel la partie de fond (102) et/ou la partie de couvercle (104) sont réalisées sous forme de pièce moulée en plastique.

7. Carter de boîte de vitesses (100) selon l'une quelconque des revendications précédentes, dans lequel la partie de couvercle (104) présente une ouverture de levier de sélection (200) pour le passage du levier de sélection (602).

8. Module de changement de vitesses (600) comprenant les caractéristiques suivantes :
un levier de sélection (602) ;
une coulisse de changement de vitesses (604) ; et
un carter de boîte de vitesses (100) selon la revendication 7, la coulisse de changement de vitesses (604) étant disposée dans la partie de fond (102), une portion du levier de sélection (602) étant guidée à travers l'ouverture de levier de sélection (200) de la partie de couvercle (104) et une portion d'extrémité du levier de sélection (602) étant disposée de manière déplaçable dans la coulisse de changement de vitesses (604).
